Europäisches Patentamt

European Patent Office

Office européen des brevets

(11) Veröffentlichungsnummer: **0 499 259 A2**

# EUROPÄISCHE PATENTANMELDUNG

(21) Anmeldenummer: **92102440.2**

(22) Anmeldetag: **13.02.92**

(51) Int. Cl.⁵: **G01M 3/20**

(30) Priorität: **15.02.91 DE 4104730**

(43) Veröffentlichungstag der Anmeldung:
**19.08.92 Patentblatt 92/34**

(84) Benannte Vertragsstaaten:
**BE CH DE ES FR GB IT LI NL**

(71) Anmelder: **LIOUI MOLY GMBH**
**Jerg-Wieland-Strasse 4**
**W-7900 Ulm-Lehr(DE)**

(72) Erfinder: **Schreiber, Hans**
**Neenstetter Strasse 20**
**W-7901 Breitingen(DE)**
Erfinder: **Mitter, Leo**
**Insel 23**
**W-7910 Neu-Ulm(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86(DE)**

(54) **Mittel zum Nachweis von Undichtigkeiten im Ansaugtrakt von Kraftfahrzeugen.**

(57) Ein Mittel zum Nachweis von Undichtigkeiten im Ansaugtrakt von Kraftfahrzeugmotoren enthält
a) 70 bis 100 Gew.-% Aceton,
b) 0 bis 20 Gew.-% eines Cetanzahlverbesserers für Heizöle und
c) 0 bis 10 Gew.-% eines Lösungsvermittlers für a) und b).
Der Cetanzahlverbesserer kann dabei vorzugsweise ein Alkylnitrat mit 3 bis 8 C-Atomen sein, wobei die Alkylkette geradkettig, verzweigt oder cyclisch sein kann.
Bevorzugte Lösungsvermittler sind Propylencarbonat oder Butyldiglykol.

Die vorliegende Erfindung betrifft ein Mittel zum Nachweis von Undichtigkeiten im Ansaugtrakt von Kraftfahrzeugmotoren sowie ein Verfahren zur Durchführung eines solchen Nachweises unter Anwendung des erfindungsgemäßen Mittels.

Eine häufige Funktionsstörung bei Kraftfahrzeugmotoren läßt sich auf Undichtigkeiten im Ansaugtrakt des Motors zurückführen, wobei durch Lufteintritt die Zündeigenschaften der Kraftstoffe und damit das gesamte Verhalten des Motors nachhaltig beeinträchtigt werden. Um derartige Undichtigkeitsstellen aufzufinden, ist es manchmal notwendig, den gesamten Ansaugbereich des Motors auseinanderzunehmen und alle Verbindungen und ihre Dichtungen sorgfältig zu überprüfen. Dies ist ein sehr großer zeitlicher Aufwand, was sich wiederum in hohen Kosten bei Reparaturen auswirkt. Um das Auseinandernehmen zu vermeiden, wurden bisher bereits Mittel angewandt, die von außen auf für Undichtigkeiten anfällige Stellen des Ansaugtraktes von Motoren aufgebracht wurden und dann bei Vorliegen einer Undichtigkeit eine Anzeigewirkung aufwiesen. Die bisher bekannten Mittel haben jedoch den Nachteil, daß sie gesundheitsschädlich und/oder umweltschädlich sind und deshalb teilweise von der Berufsgenossenschaft der Kraftfahrzeugfachleute verboten sind, oder aber andererseits Schädigungen am Motor nach ihrem Eintreten in den Ansaugtrakt und dadurch auch in den Motor selbst hervorrufen.

Der vorliegenden Erfindung lag daher die Aufgabe zugrunde, ein Mittel bereitzustellen, das es auf einfache Weise ermöglicht, das Vorhandensein von Undichtigkeiten an bestimmten Stellen festzustellen. Des weiteren soll das Mittel umweltschonend und nicht gesundheitsschädlich sein. Auch der Nachweis soll möglichst einfach zu führen sein.

Gelöst wird die Aufgabe erfindungsgemäß durch ein Mittel zum Nachweis von Undichtigkeiten im Ansaugtrakt von Kraftfahrzeugmotoren, das dadurch gekennzeichnet ist, daß es

a) 70 bis 100 Gew.-% Aceton,
b) 0 bis 20 Gew.-% eines Cetanzahlverbesserers für Heizöle und
c) 0 bis 10 Gew.-% eines Lösungsvermittlers für a) und b) enthält.

Als Kraftfahrzeugmotoren sind im Rahmen der Erfindung alle Motoren zu verstehen, die mit Kraftstoffen über einen Ansaugtrakt zu einem Verbrennungsraum hin versorgt werden, bei denen das Eindringen von Luft die Funktionstüchtigkeit behindert. Dies ist sowohl der Fall für Otto-Motoren als auch für Dieselmotoren. Die Erfindung ist daher anwendbar sowohl für alle Kraftfahrzeugmotoren im Personenwagenbereich, ebenso wie für entsprechende Motoren von Lastkraftwagen oder andere Motoren, die brennbare Kraftstoffe verwenden, beispielsweise Generatoren zur Erzeugung von Strom.

Für alle derartigen Motoren, die über eine Verbrennungskammer und einen Ansaugtrakt für Kraftstoffe verfügen, ist das erfindungsgemäße Mittel anwendbar.

Im Rahmen der Erfindung werden vorzugsweise Verbindungen angewandt, deren Verbrennungsprodukte umweltschonend sind. Als Cetanzahlverbesserer wird vorzugsweise ein Alkylnitrat mit 3 bis 8 Kohlenstoffatomen verwendet, wobei die Alkylkette geradkettig, verzweigt oder cyclisch sein kann. Besonders bevorzugt sind hier 2-Ethyl-hexylnitrat und Isopropylnitrat.

Als Lösungsvermittler wird erfindungsgemäß vorzugsweise Propylencarbonat oder Butyldiglykol eingesetzt.

Das erfindungsgemäße Mittel läßt sich auf die für Undichtigkeiten anfälligen Stellen in verschiedener Weise aufbringen. So kann es beispielsweise aufgepinselt bzw. aufgestrichen werden, kann in Form eines Pumpsprays aufgesprüht werden, jedoch kann es sehr einfach und gleichmäßig aufgebracht werden, indem dem Mittel zusätzlich ein Treibgas beigegeben ist, das ein gleichmäßiges Aufsprühen erleichtert. Obwohl erfindungsgemäß alle Treibgase verwendet werden können, ist es aus wirtschaftlichen und auch umweltschonenden Gründen bevorzugt, daß das Mittel $CO_2$ als Treibgas enthält.

Ein weiterer Gegenstand der Erfindung ist ein Verfahren zum Nachweis von Undichtigkeiten im Ansaugtrakt von Kraftfahrzeugmotoren, das dadurch gekennzeichnet ist, daß man ein erfindungsgemäßes, wie oben beschriebenes Mittel auf für Undichtigkeiten anfällige Stellen aufbringt und das Vorliegen einer Undichtigkeit über ein Absinken der Drehzahl oder/und Ansteigen des Anteils von Kohlenmonoxid und Kohlenwasserstoffen im Abgas nachweist.

Wie bereits beschrieben, kann das erfindungsgemäße Mittel auf vielfältige Weise auf die für Undichtigkeiten anfälligen Stellen aufgebracht werden. Es ist im Rahmen der Erfindung auch möglich, den gesamten Motor mit dem Mittel einzusprühen. Bei Vorliegen einer Undichtigkeit gelangt das Mittel mit der durch die Undichtigkeit angesaugten Luft in den Verbrennungsraum des Motors, worauf sich der Motor "verschluckt", d.h. ein plötzliches Absinken der Drehzahl um 200 bis 300 Umdrehungen/Minute stattfindet. Im erfindungsgemäßen Verfahren kann daher das Vorliegen einer Undichtigkeit bereits akustisch Sekunden nach dem Aufbringen des erfindungsgemäßen Mittels auf die undichte Stelle festgestellt werden. Genauer kann die Messung über den Drehzahlmesser erfolgen. Fast gleichzeitig mit dem Absinken der Drehzahl erhöht sich durch die Verbrennung des erfindungsgemäßen Mittels im Verbrennungsraum des Kraftfahrzeugmotors schlagartig der Anteil an Kohlenwasserstoffen und Kohlenmonoxid, so daß auch über die Messung der Emission dieser Verbrennungsprodukte der Effekt sofort festgestellt werden kann.

Besonders hervorzuheben ist, daß das erfindungsgemäße Mittel und seine Anwendung im erfindungsgemäßen Verfahren keinerlei schädigende Wirkung auf den Motor ausübt. Das Mittel wird vollständig verbrannt und über den Auspuff ausgestoßen, wobei keinerlei Rückstände im Motor verbleiben, die eine eventuelle Verschmutzung oder anderweitige Schädigungen des Motors bewirken könnten. Durch ein Absaugen der Auspuffgase des Motors in der Werkstatt können vorzugsweise zusätzlich die zwar nur geringen, jedoch immerhin vorhandenen Mengen an Kohlenmonoxid und Kohlenwasserstoffen entfernt werden.

Das erfindungsgemäße Mittel und seine Anwendung im erfindungsgemäßen Verfahren ermöglichen erstmals eine schnelle Entdeckung von Undichtigkeiten im Ansaugtrakt von Kraftfahrzeugmotoren, ohne daß dabei eine Gesundheitsgefährdung der Kraftfahrzeugmechaniker oder eine Umweltschädigung befürchtet werden muß. Bereits geringe Mengen des erfindungsgemäßen Mittels, die in den Verbrennungstrakt gelangen, zeigen eine eindeutige Wirkung auf den Motor, die jedoch nur momentan zu sehen ist und keinerlei schädigende Effekte für den Motor aufweist. Somit eröffnet das erfindungsgemäße Mittel eine wertvolle Möglichkeit, schnell und ohne Gefährdung der Mechaniker Undichtigkeiten zu lokalisieren, was bisher in einer derart schonenden Weise lediglich durch das zeitraubende Auseinandernehmen des gesamten Ansaugtraktes des Motors möglich war.

**Patentansprüche**

1. Mittel zum Nachweis von Undichtigkeiten im Ansaugtrakt von Kraftfahrzeugmotoren,
   **dadurch gekennzeichnet,**
   daß es
       a) 70 bis 100 Gew.-% Aceton,
       b) 0 bis 20 Gew.-% eines Cetanzahlverbesserers für Heizöle und
       c) 0 bis 10 Gew.-% eines Lösungsvermittlers für a) und b) enthält.

2. Mittel nach Anspruch 1,
   **dadurch gekennzeichnet,**
   daß es als Cetanzahlverbesserer ein Alkylnitrat mit 3 bis 8 C-Atomen enthält, wobei die Alkylkette geradkettig, verzweigt oder cyclisch sein kann.

3. Mittel nach Anspruch 2,
   **dadurch gekennzeichnet,**
   daß es 2-Ethyl-hexylnitrat oder Isopropylnitrat enthält.

4. Mittel nach einem der vorhergehenden Ansprüche,
   **dadurch gekennzeichnet,**
   daß es als Lösungsvermittler Propylencarbonat oder Butyldiglykol enthält.

5. Mittel nach einem der vorhergehenden Ansprüche,
   **dadurch gekennzeichnet,**
   daß es zusätzlich ein Treibgas, vorzugsweise $CO_2$ enthält.

6. Verfahren zum Nachweis von Undichtigkeiten im Ansaugtrakt von Kraftfahrzeugmotoren,
   **dadurch gekennzeichnet,**
   daß man ein Mittel nach einem der Ansprüche 1 bis 5 auf für Undichtigkeiten anfällige Stellen aufbringt und das Vorliegen einer Undichtigkeit an der jeweiligen Stelle über ein Absinken der Drehzahl des laufenden Motors oder/und ein Ansteigen des Anteils von Kohlenmonoxid und Kohlenwasserstoffen im Abgas feststellt.